# FASCICULE DE BREVET EUROPEEN

(11) **EP 4 132 806 B1**
(45) Date de publication et mention de la délivrance du brevet: **31.07.2024**
(21) Numéro de dépôt: 21717391.3
(22) Date de dépôt: 06.04.2021
(51) Int. Cl.: B60K 6/442, B60K 6/36, B60K 6/547, F16H 3/08, B60K 6/387

(54) **GROUPE MOTOPROPULSEUR HYBRIDE COMPORTANT DEUX MOTEURS ELECTRIQUES, UN MOTEUR THERMIQUE NON COAXIAUX, ET TROIS COUPLEURS, ET SON PROCEDE DE COMMANDE**
HYBRIDANTRIEBSSTRANG MIT ZWEI ELEKTROMOTOREN UND EINEM VERBRENNUNGSMOTOR, DIE NICHT KOAXIAL SIND, UND DREI KOPPLERN, UND VERFAHREN ZUR STEUERUNG DAVON
HYBRID POWERTRAIN COMPRISING TWO ELECTRIC MOTORS AND ONE COMBUSTION ENGINE, WHICH ARE NOT COAXIAL, AND THREE COUPLERS, AND METHOD FOR CONTROLLING SAME

(30) Priorité: 10.04.2020 FR 2003611
(43) Date de publication de la demande: 15.02.2023
(73) Titulaire: NEW H POWERTRAIN HOLDING, S.L.U., 47008 Valladolid (ES)
(72) Inventeur: LASSEUR, Bertrand, 92370 Chaville (FR)
(74) Mandataire: Renault Group
(86) Numéro de dépôt international: PCT/EP2021/058851
(87) Numéro de publication internationale: WO 2021/204752

(56) Documents cités:
- EP-A1- 1 610 038
- DE-A1- 102016 221 058
- FR-A1- 3 034 386

## Description

### Domaine technique de l'invention

La présente invention concerne une architecture générale d'un groupe motopropulseur dit « hybride », notamment pour un véhicule automobile routier.

L'invention concerne plus particulièrement un groupe motopropulseur hybride comportant deux machines électriques et un moteur thermique.

L'invention concerne aussi le procédé de commande d'un tel groupe motopropulseur.

### Arrière-plan technique

On connait du document FR-A1-3.034.386 un groupe motopropulseur hybride de véhicule comportant trois sources motrices parmi lesquelles une machine électrique principale, une machine électrique secondaire et un moteur thermique dont les arbres sont parallèles, et une boîte de vitesses à arbres parallèles et à engrenages qui comporte trois arbres d'entrée parallèles et décalés latéralement dont chacun est relié à une des trois sources motrices, et deux coupleurs permettant d'établir sélectivement le transfert du couple fourni par l'arbre d'entrée de chaque source motrice à un arbre commun de sortie vers les roues du véhicule. Une telle conception permet de disposer d'une chaine de traction ou de propulsion dite « multimodes » qui permet notamment l'utilisation simultanée ou découplée de trois sources motrices, pour disposer de nombreux modes de fonctionnement différents, électriques, hybrides ou thermiques.

La longueur totale « hors-tout » du groupe motopropulseur correspond globalement à la somme des longueurs « axiales » du moteur thermique, de la boîte de vitesses, et la machine électrique principale qui sont globalement alignés.

La machine électrique secondaire est adjacente latéralement au moteur thermique. L'implantation transversale d'un tel groupe motopropulseur, par exemple dans le compartiment moteur avant d'un véhicule automobile, n'est pas possible si des équipements du moteur thermique tels qu'un turbocompresseur et / ou un catalyseur de dépollution sont trop volumineux et interfèrent avec la machine électrique secondaire implantée le long de l'un des côtés du moteur thermique.

Afin de réduire la longueur hors-tout d'un tel groupe motopropulseur qui soit d'une grande compacité latérale, tout en conservant ses différents modes de fonctionnement, on a proposé dans la demande de brevet français non publiée FR1912704 déposée le 14 novembre 2019, un groupe motopropulseur hybride de véhicule comportant :
- trois sources motrices MT, ME1, ME2 parmi lesquelles une machine électrique principale ME1, une machine électrique secondaire ME2 et un moteur thermique MT dont les arbres sont parallèles ;
- et une boîte de vitesses 4 à arbres parallèles et à engrenages qui comporte trois arbres d'entrée parallèles et décalés latéralement 11, 5, 6 dont chacun est relié à une des trois sources motrices et deux coupleurs C1, C2 permettant d'établir sélectivement le transfert du couple fourni par l'arbre d'entrée 11, 5, 6 de chaque source motrice MT, ME1, ME2 à un arbre commun 7 de sortie vers les roues du véhicule,

dans lequel, selon la direction axiale commune aux arbres d'entrée 11, 5, 6 de la boîte de vitesses 4, la boîte de vitesses est disposée axialement entre, d'une part, le moteur thermique MT et, d'autre part, les deux machines électriques ME1, ME2,
dans lequel les deux machines électriques ME1, ME2 sont agencées sensiblement dans un même plan orthogonal aux arbres parallèles 11, 5, 6 de la boîte de vitesses,
et dans lequel qu'un premier coupleur C1 et un deuxième coupleur C2 établissent sélectivement la transmission du couple du moteur thermique MT sur l'arbre commun 7 de sortie selon quatre rapports de transmission.

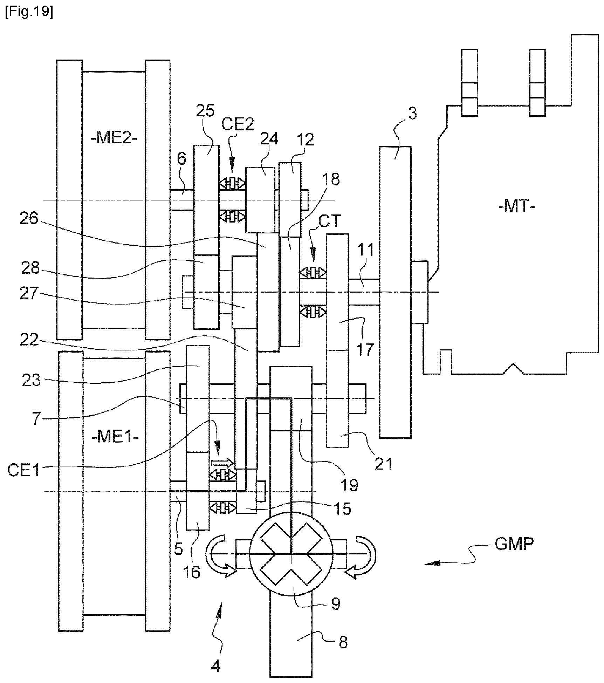

Un tel groupe motopropulseur est représenté à la figure 19 des dessins annexés.

Selon cette conception, l'arbre d'entrée de la machine électrique principale ME1 est lié en permanence en rotation avec l'arbre commun de sortie par un pignon fixe porté par son arbre d'entrée qui engrène avec un pignon fixe porté par l'arbre commun 7 de sortie du groupe motopropulseur. Il en résulte que cette machine électrique est entraînée en permanence et produit de ce fait une traînée lorsqu'elle n'est pas utilisée.

De même, dans les différents modes de fonctionnement dans lesquels le moteur thermique MT est couplé à l'arbre commun de sortie, la machine électrique secondaire M2 est aussi entraînée.

Ainsi, le bon rendement énergétique de l'ensemble du groupe motopropulseur est tributaire du rendement de chaque machine électrique, et ce dernier dépend de la technologie de conception de ces machines électriques.

Le document EP 1 610 038 A1 divulgue un groupe motopropulseur hybride comprenant un moteur thermique, deux machine électriques et une boîte de vitesses disposée d'un groupe de trois pignons liés en rotation.

L'invention vise à proposer une nouvelle conception d'un groupe motopropulseur hybride compact comportant deux machines électriques et un moteur thermique dont le rendement énergétique est optimisé.

### Résumé de l'invention

L'invention propose un groupe motopropulseur hybride de Groupe motopropulseur hybride de véhicule comportant :
- trois sources motrices parmi lesquelles une première machine électrique, une deuxième machine électrique et un moteur thermique dont les arbres sont parallèles ;
- et une boîte de vitesses à quatre arbres parallèles et à engrenages qui comporte :
   - un arbre commun de sortie vers les roues du véhicule ;
   - et trois arbres d'entrée parallèles et décalés latéralement parmi lesquels :
      -- un premier arbre d'entrée relié à la première machine électrique et qui porte un premier coupleur ;
      -- un deuxième arbre d'entrée relié à la deuxième machine électrique qui porte un deuxième coupleur,
      -- un arbre d'entrée relié au moteur thermique, qui porte un coupleur, dit coupleur thermique, et un groupe de trois pignons fous liés en rotation dont un pignon qui engrène en permanence avec un pignon fou porté par le deuxième arbre d'entrée de la deuxième machine électrique, un pignon qui engrène en permanence avec un pignon fixe de ligne secondaire porté par l'arbre commun de sortie, et un pignon qui engrène en permanence avec un pignon fou porté par le deuxième arbre d'entrée de la deuxième machine électrique ;
   dans laquelle chacun des coupleurs permet d'établir sélectivement le transfert du couple fourni par l'arbre d'entrée qui le porte à l'arbre commun de sortie vers les roues du véhicule.

Selon d'autres caractéristiques de l'invention, optionnellement :
- le coupleur thermique et le deuxième coupleur établissent sélectivement la transmission directe du couple du moteur thermique sur l'arbre commun de sortie selon trois rapports de transmission ;
- le couple du moteur thermique est envoyé vers l'arbre commun de sortie par l'intermédiaire :
   -- de deux pignons fous qui sont portés par l'arbre d'entrée du moteur thermique et entre lesquels est interposé le coupleur thermique qu'il porte ;
   -- et de deux pignons fous qui sont portés par le deuxième arbre d'entrée de la deuxième machine électrique, entre lesquels est interposé le deuxième coupleur, et dont chacun engrène en permanence avec un pignon fou associé porté par l'arbre d'entrée du moteur thermique ;
- le premier arbre d'entrée de la première machine électrique porte deux pignons fous entre lesquels est interposé le premier coupleur et dont chacun engrène en permanence avec un pignon fixe associé porté par l'arbre commun de sortie ;
- un pignon fixe porté par le deuxième arbre d'entrée de la deuxième machine électrique engrène en permanence avec l'un des deux pignons fous qui sont portés par l'arbre d'entrée du moteur thermique ;
- l'arbre commun de sortie porte un pignon fixe qui engrène en permanence avec l'autre des deux des deux pignons fous qui sont portés par l'arbre d'entrée du moteur thermique ;
- un pignon fou porté par l'arbre d'entrée du moteur thermique engrène en permanence avec un pignon fixe porté par l'arbre commun de sortie ;
- l'arbre commun de sortie porte successivement trois pignons fixes dont :
   -- un premier pignon fixe de ligne secondaire qui engrène en permanence avec l'autre des deux des deux pignons fous qui sont portés par l'arbre d'entrée du moteur thermique ;
   -- un deuxième pignon fixe de ligne secondaire qui engrène en permanence avec ledit pignon fou porté par l'arbre d'entrée du moteur thermique et l'un des deux pignons fous portés par le premier arbre entre lesquels est interposé le premier coupleur ;
   -- et un troisième pignon fixe de ligne secondaire qui engrène en permanence avec l'autre des deux pignons fous portés par le premier arbre entre lesquels est interposé le premier coupleur ;
- le groupe de trois pignons fous liés en rotation porté par l'arbre d'entrée du moteur thermique comporte :
   -- un pignon qui engrène en permanence avec un premier des deux pignons fous qui sont portés par le deuxième arbre d'entrée de la deuxième machine électrique ;
   -- un pignon qui engrène en permanence avec le deuxième pignon fixe de ligne secondaire ;
   -- et un pignon qui engrène en permanence avec un second des deux pignons fous qui sont portés par le deuxième arbre d'entrée de la deuxième machine électrique ;
- selon la direction axiale commune aux arbres d'entrée de la boîte de vitesses, la boîte de vitesses est disposée axialement entre, d'une part, le moteur thermique et, d'autre part, les deux machines électriques ;
- la première machine électrique et la deuxième machine électrique sont agencées sensiblement dans un même plan orthogonal aux arbres parallèles de la boîte de vitesses.

L'invention propose aussi un procédé de commande d'un groupe motopropulseur selon la revendication indépendante 12, caractérisé en ce que la fermeture du premier coupleur et du deuxième coupleur, permet de déplacer le véhicule avec seulement la première machine électrique, selon l'un ou l'autre de deux rapports de transmission.

Selon les caractéristiques du procédé définies dans les revendications indépendantes de procédé 13 à 18 :
- la fermeture du deuxième coupleur permet de déplacer le véhicule en mode électrique avec seulement la deuxième machine électrique selon l'un ou l'autre de deux rapports de transmission ;
- la fermeture du premier et du deuxième coupleur permet de déplacer le véhicule en mode électrique avec la première machine électrique et l'appoint de la deuxième machine électrique selon l'un ou l'autre de leurs deux rapports de transmission ;
- la fermeture du coupleur thermique permet au moteur thermique d'entraîner la deuxième machine électrique en génératrice de courant, selon l'un ou l'autre de deux rapports pour recharger les batteries du véhicule, en roulage et à l'arrêt du véhicule ;
- la fermeture simultanée des trois coupleur permet de déplacer le véhicule en mode hybride avec le cumul du moteur thermique, de la première machine électrique et de la deuxième machine électrique selon trois combinaisons différentes de rapports de transmission du moteur thermique et de la deuxième machine électrique ;
- la fermeture simultanée du coupleur thermique et du deuxième coupleur permet de déplacer le véhicule en mode thermique avec seulement le moteur thermique qui peut entraîner pour partie la première machine électrique en génératrice de courant, pour recharger des batteries lors du roulage du véhicule ou entraîner le véhicules selon l'un ou l'autre de deux rapports combinés de transmission ;
- la fermeture du coupleur thermique permet au moteur thermique d'entraîner le véhicule en mode thermique pur sans entraîner aucune des deux machines électriques.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une représentation schématique de l'architecture générale d'un exemple de réalisation d'un groupe motopropulseur selon l'invention ;
[Fig.2] - la figure 2 illustre un mode de fonctionnement purement électrique en marche avant avec la première machine électrique seule du groupe motopropulseur représenté à la figure 1, selon un premier rapport de transmission ;
[Fig.3] - la figure 3 illustre un mode de fonctionnement purement électrique en marche avant avec la première machine électrique seule du groupe motopropulseur représenté à la figure 1, selon un deuxième rapport de transmission ;
[Fig.4] - la figure 4 illustre un mode de fonctionnement purement électrique en marche avant avec la deuxième machine électrique seule du groupe motopropulseur représenté à la figure 1, selon un premier rapport de transmission ;
[Fig.5] - la figure 5 illustre un mode de fonctionnement purement électrique en marche avant avec la deuxième machine électrique seule du groupe motopropulseur représenté à la figure 1 ;
[Fig.6] - la figure 6 illustre un mode de fonctionnement purement électrique avec la machine électrique primaire selon son premier rapport de transmission et la deuxième machine électrique selon son premier rapport de transmission ;
[Fig.7] - la figure 7 illustre un mode de fonctionnement purement électrique avec la machine électrique primaire selon son premier rapport de transmission et la deuxième machine électrique selon son deuxième rapport de transmission ;
[Fig.8] - la figure 8 illustre un mode de fonctionnement purement électrique avec la machine électrique primaire selon son deuxième rapport de transmission et la deuxième machine électrique selon son deuxième rapport de transmission ;
[Fig.9] - la figure 9 illustre un mode de fonctionnement électrique dit « Range Extender » - en véhicule roulant en marche avant - avec la première machine électrique en mode traction selon son premier rapport de transmission, et la deuxième machine électrique ME2 en mode génératrice de courant selon son mode « Range Extender » ;
[Fig.10] - la figure 10 illustre un mode de fonctionnement électrique dit « Range Extender » - en véhicule roulant en marche avant - avec la première machine électrique en mode traction selon son deuxième rapport de transmission, et la deuxième machine électrique ME2 en mode génératrice de courant selon son mode « Range Extender » ;
[Fig.11] - la figure 11 illustre un mode de fonctionnement dit « Range Extender » - en véhicule à l'arrêt - avec la seule deuxième machine électrique en mode génératrice de courant selon son mode « Range Extender » ;
[Fig.12] - la figure 12 illustre un mode de fonctionnement thermique pur en prise directe sans entraînement d'aucune des deux machines électriques ;
[Fig.13] - la figure 13 illustre un mode de fonctionnement thermique en prise directe avec une possibilité d'accouplement les deux machines électriques selon leurs deuxièmes rapports de transmission ;
[Fig.14] - la figure 14 illustre un mode de fonctionnement thermique en prise directe avec la deuxième machine électrique couplée selon son deuxième rapport de transmission ;
[Fig.15] - la figure 15 illustre un mode de fonctionnement thermique en prise directe avec la deuxième machine électrique couplée selon son premier rapport de transmission ;
[Fig.16] - la figure 16 illustre un mode de fonctionnement dit « hybride » thermique et électrique avec les trois sources motrices fonctionnant simultanément en mode traction, avec la puissance maximale disponible et selon une première combinaison entre un rapport de transmission du moteur thermique et les deux machines électriques chacune selon son premier rapport de transmission ;
[Fig.17] - la figure 17 illustre un mode de fonctionnement dit « hybride » thermique et électrique avec les trois sources motrices fonctionnant simultanément en mode traction, avec la puissance maximale disponible et selon une combinaison entre un autre rapport du moteur thermique, et les deux machines électriques chacune selon son deuxième rapport de transmission ;
[Fig.18] - la figure 18 illustre un mode de fonctionnement dit « hybride » thermique et électrique avec les trois sources motrices fonctionnant simultanément en mode traction, avec la puissance maximale disponible et selon une combinaison entre encore un autre rapport du moteur thermique, et les deux machines électriques chacune selon son deuxième rapport de transmission ;
[Fig.19] - la figure 19 est une représentation schématique de l'architecture générale d'un exemple de réalisation d'un groupe motopropulseur selon l'état de la technique commenté plus haut.

### Description détaillée de l'invention

Dans la description qui va suivre, des éléments identiques, similaires ou analogues seront désignés par les mêmes chiffres de référence.

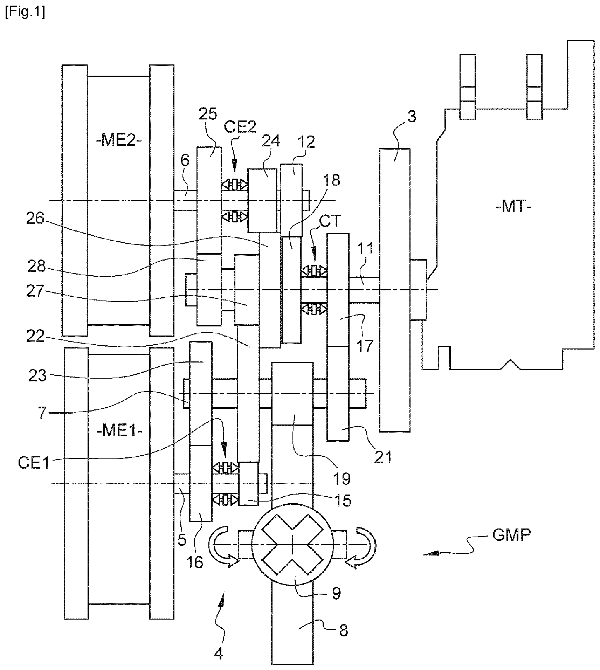

Le groupe motopropulseur hybride GMP de véhicule automobile représenté schématiquement à la figure 1, est composé de trois sources motrices MT, ME1, et ME2 reliées par des arbres d'entrée 11, 5, 6, décalés latéralement, dans une boîte de vitesses 4 à arbres parallèles et à engrenages.

Selon la direction axiale commune aux arbres parallèles d'entrée 11, 5, 6 de la boîte de vitesses 4, le moteur thermique MT, la boîte de vitesses 4, une première machine électrique ME1 et une deuxième machine électrique ME2, sont agencés axialement et successivement de droite à gauche.

En d'autres termes, selon la direction axiale commune aux arbres parallèles d'entrée 11, 5, 6 de la boîte de vitesses 4 est disposée axialement entre le moteur thermique MT d'une part et les deux machines électriques ME1-ME2 d'autre part.

Comme dans l'état de la technique illustré à la figure 19, la largeur totale LGMP du groupe motopropulseur GMP - qui correspond à la somme des largeurs transversales LMT+LBDV+LME respectivement du moteur thermique MT, de la boîte de vitesses 4 et de l'ensemble des deux machines électriques ME1 et ME2 - est réduite. Les deux machines électriques ME1 et ME2 sont ici agencées à gauche de la boîte de vitesses 4, sensiblement dans un même plan orthogonal aux axes de rotation des arbres parallèles d'entrée 11, 5, 6 de la boîte de vitesses 4.

La boîte de vitesses 4 selon l'invention comporte trois coupleurs CT, CE1, et CE2, permettant d'établir sélectivement le transfert du couple fourni par l'arbre d'entrée de chaque source motrice, sur un arbre commun de sortie 7, vers les roues du véhicule.

Chaque coupleur est un coupleur à trois positions qui est agencé entre deux pignons fous qu'il peut craboter sélectivement sur l'arbre associé en fonction de la position axiale qu'il occupe - à gauche ou à droite - par rapport à sa position centrale neutre.

Dans le mode de réalisation non limitatif de l'invention, illustré par les figures, les trois sources motrices sont respectivement une première machine électrique ME1, une deuxième machine électrique ME2, et un moteur thermique MT.

Les couples des trois sources motrices MT, ME1 et ME2 sont réunis dans la boîte de vitesses 4.

L'arbre entrée 11 du moteur thermique MT n'est pas concentrique aux arbres d'entrée 5, 6 des machines électriques ME1 et ME2.

Les trois arbres d'entrée 11, 5, 6 des trois sources motrices MT, ME1 et ME2 sont décalés latéralement les uns par rapport aux autres, et ils sont reliés à l'arbre commun de sortie 7.

La boîte de vitesses 4 comporte ainsi :
- un arbre d'entrée 5 relié au rotor de la première machine électrique ME1 ;
- un arbre d'entrée 6 relié au rotor de la deuxième machine électrique ME2 ;
- et un arbre d'entrée 11 relié directement au volant d'inertie 3 au vilebrequin du moteur thermique MT.

L'arbre commun de sortie, ou arbre secondaire, 7 entraîne une couronne 8 d'un différentiel 9 relié aux roues du véhicule (non représentées).

L'arbre d'entrée 11 du moteur thermique MT porte deux pignons fous 17, 18 entre lesquels est agencé un coupleur CT, dit coupleur thermique, à trois positions qui établit sélectivement la transmission du couple du moteur thermique MT par l'un ou l'autre des deux pignons fous 17 ou 18.

Le premier pignon fou 17 engrène en permanence avec un premier pignon fixe de ligne secondaire 21 porté par l'arbre commun de sortie 7.

Le deuxième pignon fou 18 engrène en permanence avec un pignon fixe 12 porté par l'arbre d'entrée 6 de la deuxième machine électrique ME2.

Axialement entre le pignon fixe 12 et la deuxième machine électrique ME2, l'arbre d'entrée 6 porte deux pignons fous 24 et 25 entre lesquels est agencé un deuxième coupleur CE2 à trois positions qui établit sélectivement la transmission du couple de la deuxième machine électrique ME2 par l'un ou l'autre des deux pignons fous 24 ou 25.

Axialement au-delà du deuxième pignon fou 18, l'arbre d'entrée 11 du moteur thermique MT porte successivement trois pignons fous 26, 27 et 28 qui sont liés en rotation entre eux pour constituer un groupe de trois pignons ou triplet de trois pignons fous 26-27-28.

Le pignon fou 26 engrène en permanence avec le premier pignon fou 24.

Le pignon fou 27 engrène en permanence avec un deuxième pignon fixe de ligne secondaire 22 porté par l'arbre commun de sortie 7.

Le pignon fou 28 engrène en permanence avec le deuxième pignon fou 25.

La boîte 4 comporte encore un premier coupleur CE1 à trois positions qui est agencé axialement entre deux pignons fous 15 et 16 qui sont portés par le premier arbre d'entrée 5. Le premier coupleur CE1 établit sélectivement la transmission du couple de la première machine électrique ME1 par l'un ou l'autre des deux pignons fous 15 ou 16 respectivement sur le deuxième pignon fixe de ligne secondaire 22 ou sur un troisième pignon fixe secondaire 23 porté par l'arbre commun de sortie 7.

De la droite vers la gauche, l'arbre commun de sortie 7 vers les roues du véhicule porte successivement le premier pignon fixe de ligne secondaire 21, un pignon fixe 19 d'attaque sur la couronne 8 du différentiel 9, un deuxième pignon fixe de ligne secondaire 22 et un troisième pignon fixe de ligne secondaire 23.

Par l'intermédiaire des deux pignons fous adjacents et liés en rotation 26-27 portés par l'arbre d'entrée 11 du moteur thermique MT, le premier pignon fou 24 engrène en permanence avec le deuxième pignon fixe de ligne secondaire 22 porté par l'arbre commun de sortie 7.

De la droite vers la gauche, l'arbre d'entrée 11 du moteur thermique MT porte successivement les deux pignons fous 17 et 18 et le triplet de trois pignons fous 26-27-28. Chaque première machine électrique ME1 ou deuxième machine électrique ME2 peut fonctionner en moteur électrique pour participer à la traction du véhicule ou en génératrice électrique pour recharger des batteries de stockage d'énergie électrique.

L'architecture du groupe motopropulseur GMP qui vient d'être décrite permet de fonctionner :
a) - en mode purement électrique avec la première machine électrique ME1 seule et selon deux rapports différents de transmission, la deuxième machine électrique ME2 seule et selon deux rapports différents de transmission, ou avec les deux machines électriques ME1 et ME2 associées et selon trois rapports différents de transmission ;
b) - en mode électrique dit « Range Extender », en véhicule roulant avec le premier moteur électrique ME1 en mode traction - selon deux rapports différents de transmission - et la deuxième machine électrique ME2 en mode génératrice de courant, ou en véhicule à l'arrêt avec la deuxième machine électrique ME2 en mode génératrice de courant ;
c) - en mode « hybride » thermique et électrique avec les trois moteurs MT, ME1 et ME2 fonctionnant simultanément en mode traction, avec la puissance maximale disponible, selon quatre combinaisons possibles entre les rapports de la deuxième machine électrique ME2 et du moteur thermique MT, ou selon d'autres combinaisons possibles entre les rapports du moteur thermique MT et les rapports de transmission de l'une ou l'autre des deux machines électriques ME1 ou ME2 ;
d) - et en mode thermique selon trois rapports possibles du moteur thermique MT dont un rapport en prise directe dit thermique « pur » dans lequel aucune des deux machines électriques ME1 et ME2 n'est entraînée en rotation.

La transmission en prise directe par les pignons 17 et 21 en mode thermique « pur » se fait selon un rapport R1.

La transmission en prise directe par les pignons 17 et 21 selon le rapport R1 peut aussi se faire avec les deux machines électriques ME1 et ME2 couplées (Chacune selon deux rapports différents de transmission).

Une transmission en prise indirecte du moteur thermique MT peut aussi se faire par les pignons 18-12-25-28-27-22 selon un autre rapport R2.

Une autre transmission en prise indirecte du moteur thermique peut aussi se faire par les pignons 18-12-24-26-27-22 selon encore un autre rapport R3.

### Premier mode de fonctionnement : purement électrique

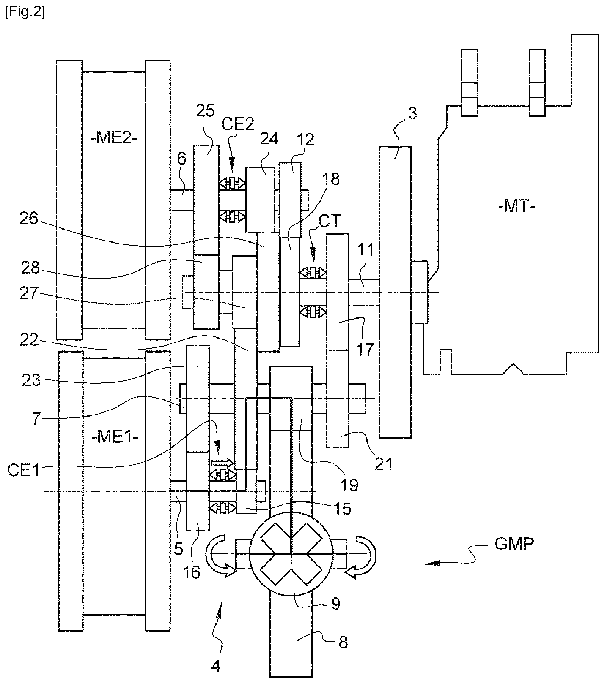

A la figure 2 les deux coupleurs CT et CE2 sont en position neutre, et le premier coupleur CE1 est en position engagée vers la droite pour lier en rotation l'arbre d'entrée 5 avec le pignon fou 15.

La première machine électrique ME1 est le seul moteur de traction, « en 1ére ».

La transmission du couple est la suivante :
ME1->15->22->19->8->9.

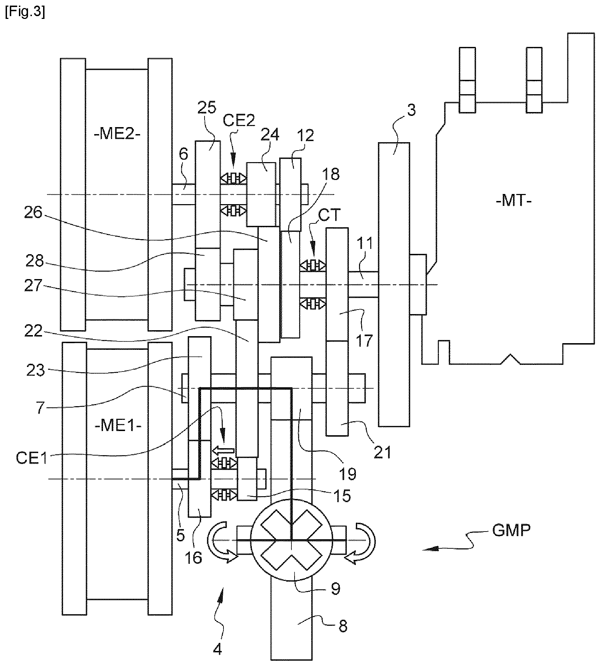

A la figure 3 les deux coupleurs CT et CE2 sont en position neutre, et le premier coupleur CE1 est en position engagée vers la gauche pour lier en rotation l'arbre d'entrée 5 avec le pignon fou 16.

La première machine électrique ME1 est le seul moteur de traction, « en 2éme ».

La transmission du couple est la suivante :
ME1->15->23->19->8->9.

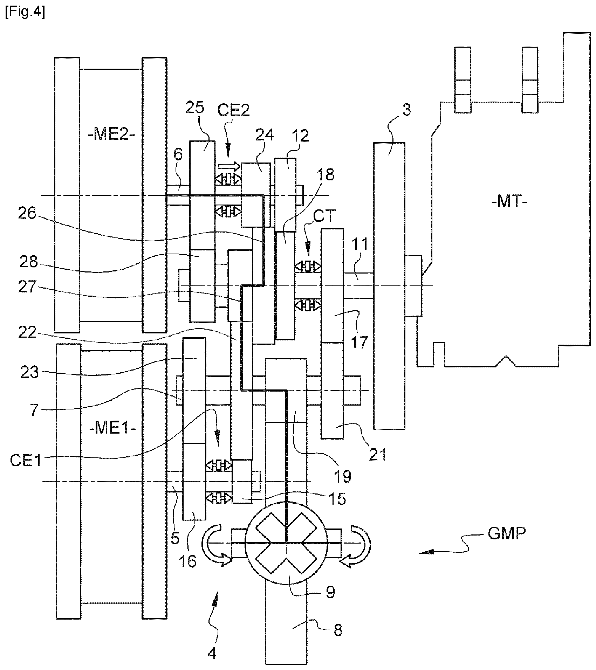

A la figure 4 les deux coupleurs CT et CE1 sont en position neutre, et le deuxième coupleur CE2 est en position engagée vers la droite pour lier en rotation l'arbre d'entrée 6 avec le pignon fou 24.

La deuxième machine électrique ME2 est le seul moteur de traction, « en 1ére ».

La transmission du couple est la suivante :
ME2->24->26-27->22->19->8->9.

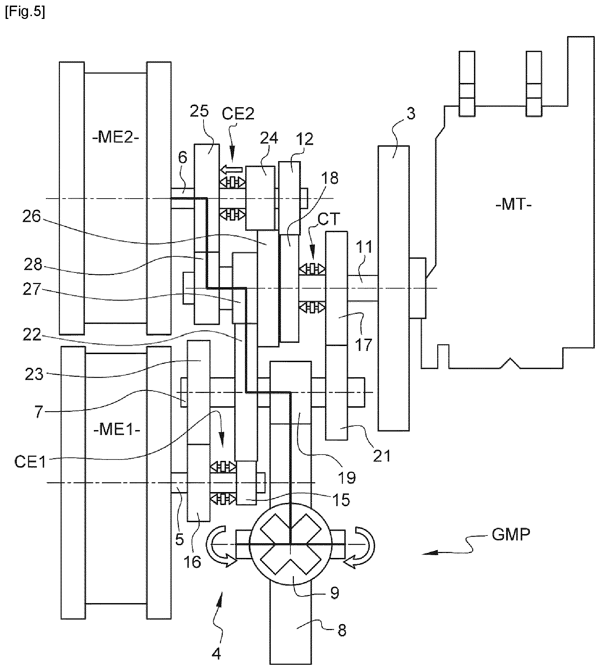

A la figure 5 les deux coupleurs CT et CE1 sont en position neutre, et le deuxième coupleur CE2 est en position engagée vers la gauche pour lier en rotation l'arbre d'entrée 6 avec le pignon fou 25.

La deuxième machine électrique ME2 est le seul moteur de traction, « en 2éme ».

La transmission du couple est la suivante :
ME2->24->28-27->22->19->8->9.

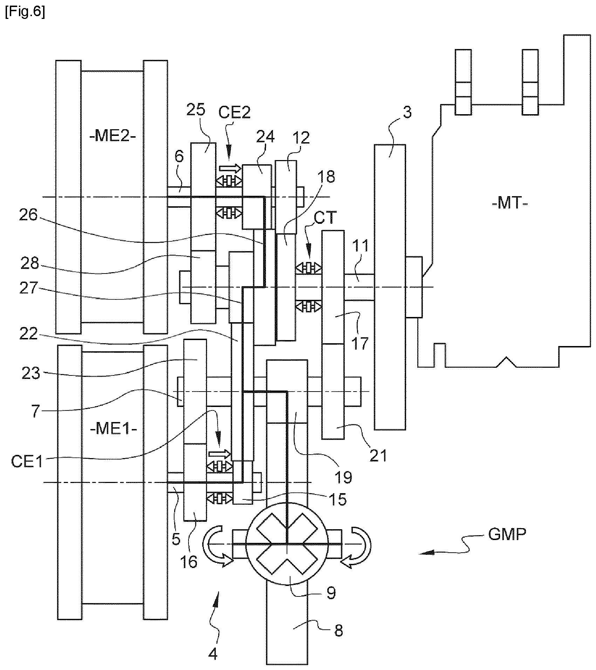

A la figure 6 le coupleur thermique CT est en position neutre, le deuxième coupleur CE2 est en position engagée vers la droite pour lier en rotation l'arbre d'entrée 6 avec le pignon fou 24 et le premier coupleur CE1 est en position engagée vers la droite pour lier en rotation l'arbre d'entrée 5 avec le pignon fou 15.

La deuxième machine électrique ME2 est un moteur de traction, « en 1ère ».

La machine électrique primaire ME1 est un moteur de traction, « en 1ère ».

La première machine électrique ME1 et la deuxième machine électrique ME2 sont ainsi associées en moteurs de traction

La transmission du couple est la suivante :
ME1->15->22->19->8->9.
   et
ME2->24->26-27->22->19->8->9.

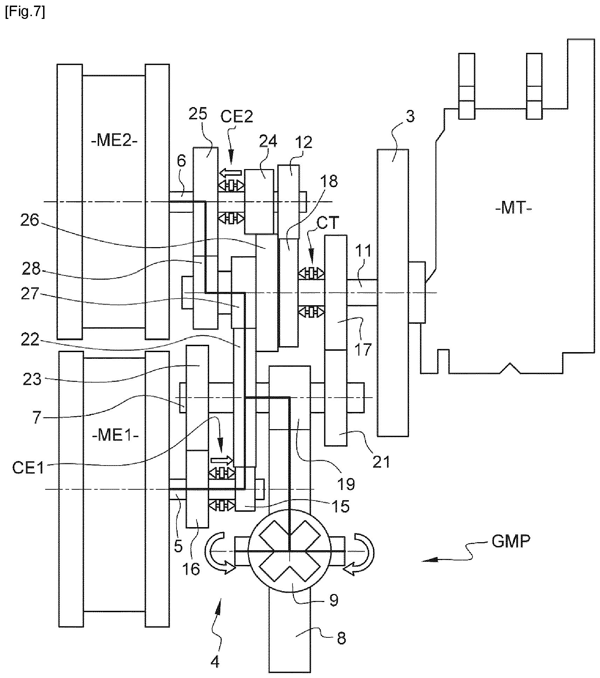

A la figure 7 le coupleur CT est en position neutre, le deuxième coupleur CE2 est en position engagée vers la gauche pour lier en rotation l'arbre d'entrée 6 avec le pignon fou 25 et le premier coupleur CE1 est en position engagée vers la droite pour lier en rotation l'arbre d'entrée 5 avec le pignon fou 15.

La deuxième machine électrique ME2 est un moteur de traction, « en 2éme ».

La machine électrique primaire ME1 est un moteur de traction, « en 1ère ».

La première machine électrique ME1 et la deuxième machine électrique ME2 sont ainsi associées en moteurs de traction

La transmission du couple est la suivante :
ME1->15->22->19->8->9.
   et
ME2->25->28-27->22->19->8->9.

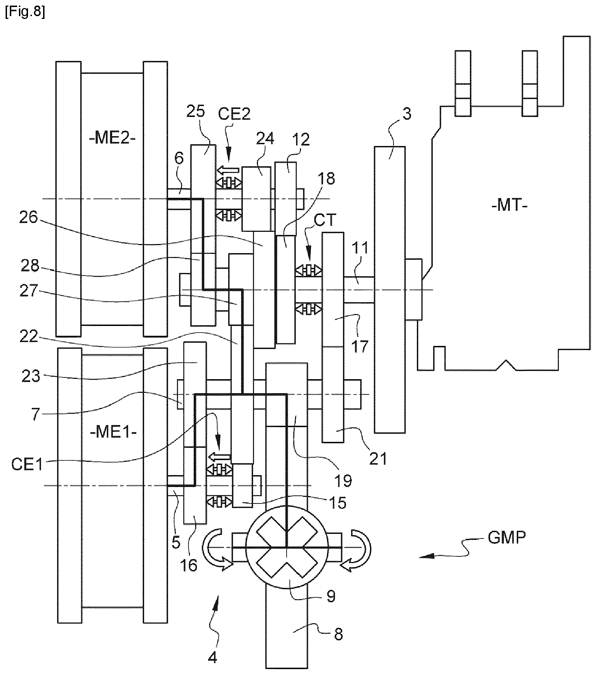

A la figure 8 le coupleur thermique CT est en position neutre, le deuxième coupleur CE2 est en position engagée vers la gauche pour lier en rotation l'arbre d'entrée 6 avec le pignon fou 25 et le premier coupleur CE1 est en position engagée vers la gauche pour lier en rotation l'arbre d'entrée 5 avec le pignon fou 16.

La deuxième machine électrique ME2 est un moteur de traction, « en 2éme ».

La machine électrique primaire ME1 est un moteur de traction, « en 2éme ».

La première machine électrique ME1 et la deuxième machine électrique ME2 sont ainsi associées en moteurs de traction

La transmission du couple est la suivante :
ME1->16->23->19->8->9.
   et
ME2->25->28-27->22->19->8->9.

Lorsque les deux machines électriques ME1 et ME2 sont associées en moteurs de traction, la succession des combinaisons illustrées aux figures 6, 7 et 8 correspond à l'enchaînement des rapports montant.

### Deuxième mode de fonctionnement : « Range Extender »

### a) Véhicule roulant

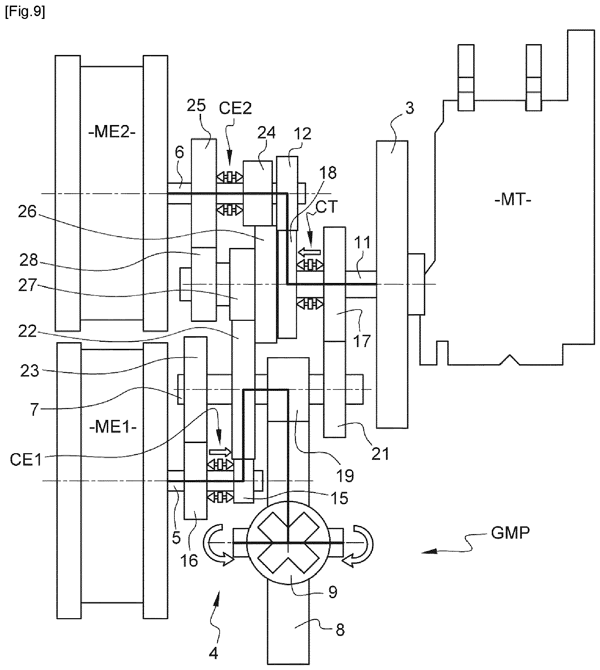

A la figure 9, le coupleur thermique CT est en position engagée vers la gauche pour lier en rotation l'arbre 11 d'entrée du moteur thermique MT et le pignon 18 qui engrène en permanence avec un pignon fixe 12 porté par l'arbre d'entrée 6 de la deuxième machine électrique ME2.

La deuxième machine électrique ME2 fonctionne en génératrice de courant et elle est entraînée par le moteur thermique MT, par exemple pour recharger une unité de stockage en énergie électrique.

La transmission du couple MT->ME2 est la suivante :
MT->18->12->ME2

Le premier coupleur CE1 est en position engagée vers la droite pour lier en rotation l'arbre d'entrée 5 avec le pignon fou 15.

La première machine électrique ME1 est le seul moteur de traction, « en 1ère ».

La transmission du couple est la suivante :
ME1->15->22->19->8->9.

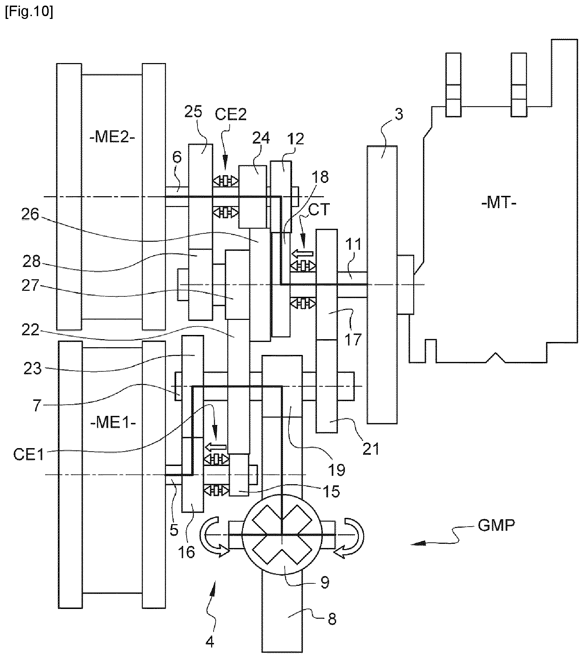

A la figure 10, le coupleur thermique CT est en position engagée vers la gauche pour lier en rotation l'arbre 11 d'entrée du moteur thermique MT et le pignon 18 qui engrène en permanence avec un pignon fixe 12 porté par l'arbre d'entrée 6 de la deuxième machine électrique ME2.

La deuxième machine électrique ME2 fonctionne en génératrice de courant et elle est entraînée par le moteur thermique MT, par exemple pour recharger une unité de stockage en énergie électrique.

La transmission du couple MT->ME2 est la suivante :
MT->18->12->ME2

Le premier coupleur CE1 est en position engagée vers la gauche pour lier en rotation l'arbre d'entrée 5 avec le pignon fou 16.

La première machine électrique ME1 est le seul moteur de traction, « en 2éme ».

La transmission du couple est la suivante :
ME1->16->23->19->8->9.

### b) Véhicule à l'arrêt

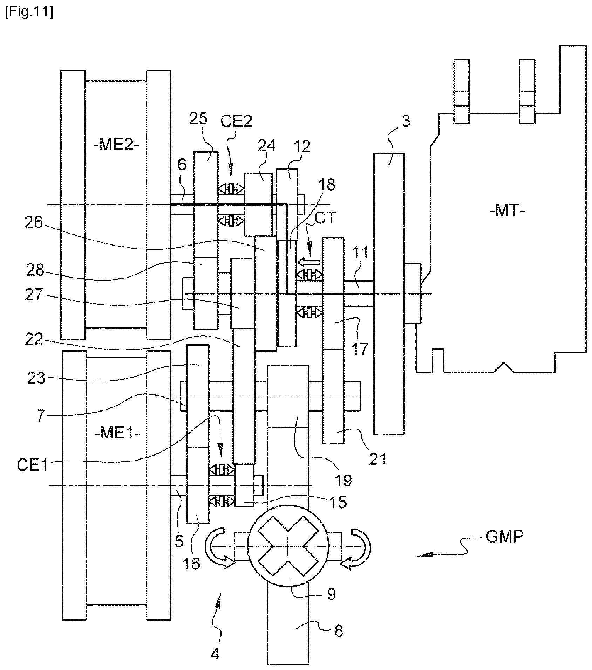

A la figure 11, seul le coupleur thermique CT est en position engagée, vers la gauche, pour lier en rotation l'arbre 11 d'entrée du moteur thermique MT et le pignon 18 qui engrène en permanence avec un pignon fixe 12 porté par l'arbre d'entrée 6 de la deuxième machine électrique ME2.

La deuxième machine électrique ME2 fonctionne en génératrice de courant et elle est entraînée par le moteur thermique MT, « en 1ère », par exemple pour recharger une unité de stockage en énergie électrique.

La transmission du couple MT->ME2 est la suivante :
MT-> 18-> 12-> M E2.

Dans les trois combinaisons de fonctionnement en mode « Range Extender » qui viennent d'être décrites, la deuxième machine électrique ME2 est toujours entraînée par le moteur thermique MT selon le même rapport d'entrainement.

### Troisième mode de fonctionnement : Moteur thermique

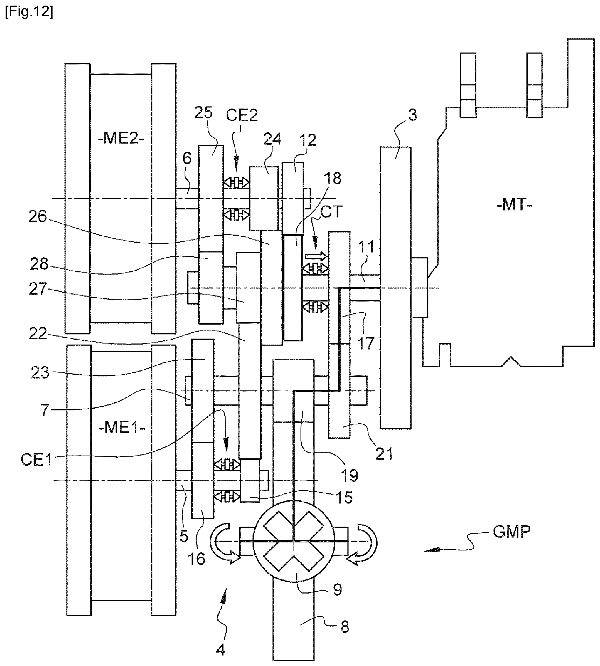

A la figure 12, seul le coupleur thermique CT est en position engagée, vers la droite, pour lier en rotation l'arbre 11 d'entrée du moteur thermique MT et le pignon 17 qui engrène en permanence avec le premier pignon fixe de ligne secondaire 21 porté par l'arbre commun de sortie 7.

Aucune des deux machines électriques ME1 et ME2 n'est liée en rotation à son arbre d'entrée associée 5, 6 respectivement.

Le moteur thermique MT est ainsi en prise directe avec l'arbre commun de sortie 7, et la transmission de son couple est la suivante :
MT->17->21->19->8->9.

Dans un tel mode de fonctionnement en prise directe du mode thermique, il est aussi possible de coupler les deux machines électriques ME1 et ME2.

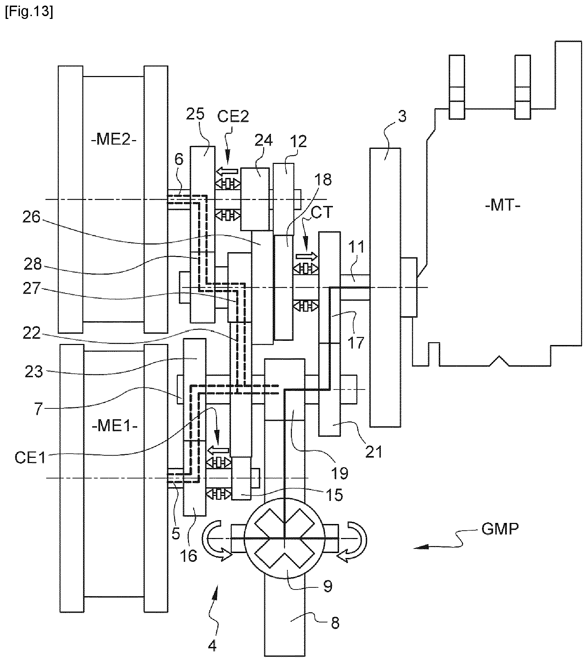

Comme représentée à la figure 13, le coupleur thermique CT est en position engagée, vers la droite, pour lier en rotation l'arbre 11 d'entrée du moteur thermique MT et le pignon 17 qui engrène en permanence avec le premier pignon fixe de ligne secondaire 21 porté par l'arbre commun de sortie 7.

Le moteur thermique MT est en prise directe avec l'arbre commun de sortie 7 et la transmission de son couple est encore la suivante :
MT->17->21->19->8->9.

Le deuxième coupleur CE2 est en position engagée vers la gauche pour lier en rotation l'arbre d'entrée 6 avec le pignon fou 25 et le premier coupleur CE1 est en position engagée vers la gauche pour lier l'arbre d'entrée 5 en rotation avec le pignon fou 16.

La deuxième machine électrique ME2 peut être un moteur de traction ou une génératrice de courant.

La machine électrique primaire ME1 peut être un moteur de traction ou une génératrice de courant.

La première machine électrique ME1 et la deuxième machine électrique ME2 peuvent ainsi être associées simultanément en moteurs de traction.

La transmission du couple est alors la suivante :
M E 1-> 16->23-> 19->8->9.
   et
ME2->25->28-27->22->19->8->9.

La première machine électrique ME1 et la deuxième machine électrique ME2 peuvent aussi être associées simultanément en génératrices de courant.

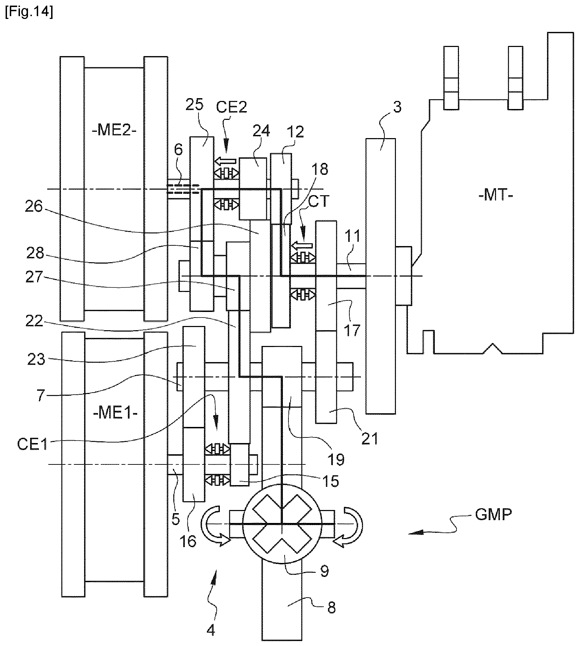

Selon la combinaison représentée à la figure 14, le coupleur thermique CT est en position engagée, vers la gauche, pour lier en rotation l'arbre 11 d'entrée du moteur thermique MT et le pignon 18.

Le deuxième coupleur CE2 est obligatoirement en position engagée vers la gauche pour lier en rotation l'arbre d'entrée 6 avec le pignon fou 25, et le premier coupleur CE1 est en position neutre.

La transmission du couple du moteur thermique MT selon un rapport en prise indirecte est la suivante :
MT->18->12->25->28 27->22->19->8->9.

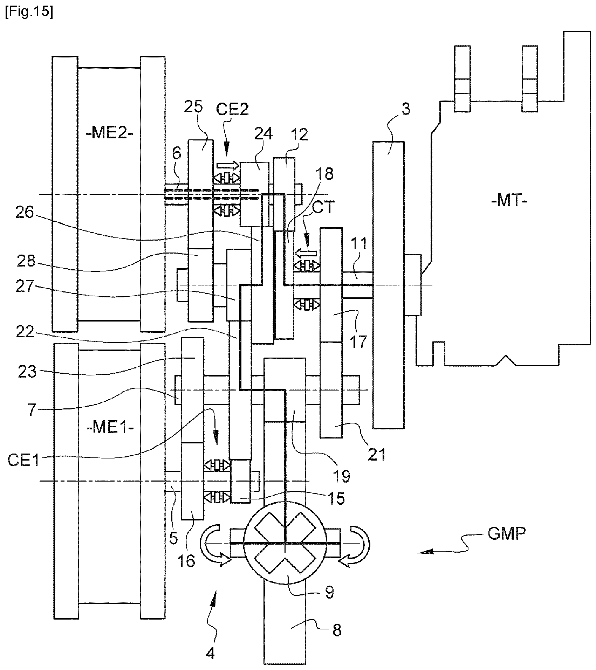

Selon la combinaison représentée à la figure 15, le coupleur thermique CT est en position engagée, vers la gauche, pour lier en rotation l'arbre 11 d'entrée du moteur thermique MT et le pignon 18.

Le deuxième coupleur CE2 est obligatoirement en position engagée vers la droite pour lier en rotation l'arbre d'entrée 6 avec le pignon fou 24, et le premier coupleur CE1 est en position neutre.

La transmission du couple du moteur thermique MT selon un autre rapport en prise indirecte est la suivante :
MT->18->12->24->26-28->22->19->8->9.

Les valeurs des deux rapports de transmission en prise indirecte du moteur thermique MT résultent du rapport de surmultiplication choisi pour le mode de fonctionnement « Range Extender » et des rapports de transmission « en 1ère » et « en 2éme » choisis pour la deuxième machine électrique ME2 fonctionnant en moteur de traction.

Pour l'un et l'autre de ces deux rapports de transmission en prise indirecte, le régime de rotation du moteur thermique MT est fonction de ces choix et du régime maximal autorisé de rotation de la deuxième machine électrique.µ

### Quatrième mode de fonctionnement : Hybride avec le moteur thermique et au moins une machine électrique couplée en moteur électrique

Dans ce mode de fonctionnement, le moteur thermique MT et l'une au moins des deux machines électriques ME1 et ME2 fonctionnant en moteur(s) électrique(s) participent simultanément à l'entrainement du véhicule.

### a) Combinaisons possibles à puissance maximale avec le moteur thermique MT et les deux moteurs électriques ME1 et ME2

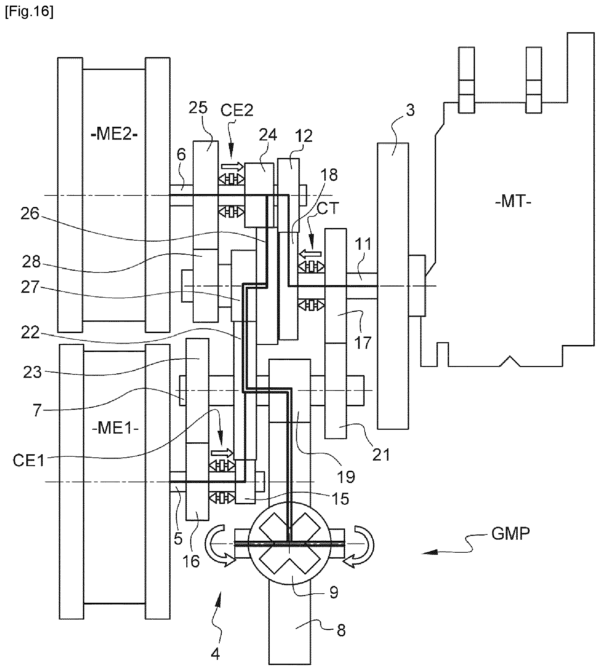

a1) Figure 16 : Moteur thermique coupleur thermique CT engagé à gauche, moteur électrique ME1 « en 1ère », moteur électrique ME2 « en 1ère ».

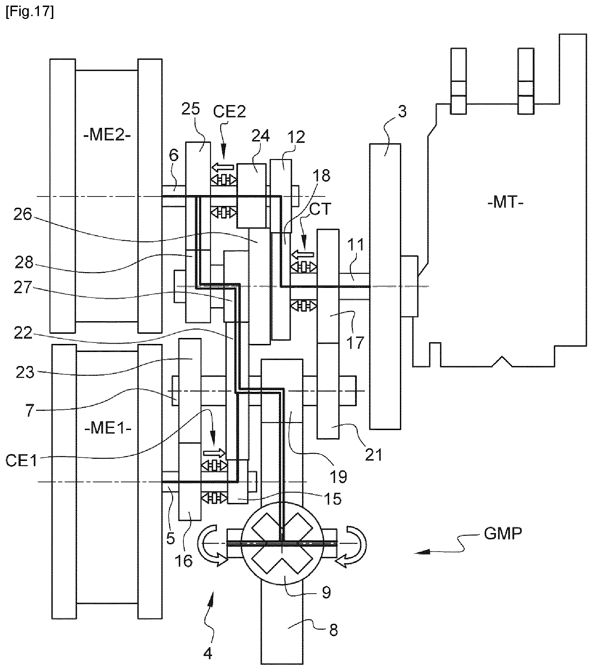

a2) Figure 17 : Moteur thermique coupleur thermique CT engagé à gauche, moteur électrique ME1 « en 1ère », moteur électrique ME2 « en 2éme ».

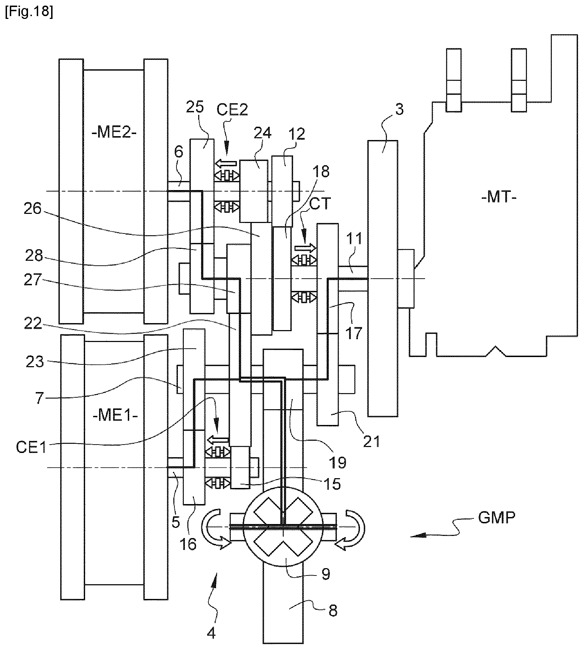

a3) Figure 18 : Moteur thermique coupleur thermique CT engagé droite, moteur électrique ME1 « en 2éme », moteur électrique ME2 « en 2éme ».

### b) Combinaisons possibles avec le moteur thermique MT et l'un ou l'autre des deux moteurs électriques ME1 et ME2

En utilisant l'une ou l'autre des deux machines électriques ME1 ou ME2 en moteur électrique, il est possible de réaliser six combinaisons (non représentées).

### Mise en oeuvre de la marche arrière

Le groupe motopropulseur ne comporte pas d'embrayage et le démarrage en marche arrière s'effectue au moyen des machines électriques ME1 et/ou ME2 « en 1ère », comme pour le démarrage en marche avant, mais avec inversion du sens de rotation des machines électriques.

Les configurations possibles sont les suivantes :
- démarrage en marche arrière avec la machine électrique ME1 seule « en 1ere » ;
- démarrage en marche arrière avec la machine ME2 seule « en 1ere »
- lorsque le besoin en couple est important (forte pente), démarrage en marche arrière avec les deux machines électriques ME1 et ME2, chacune « en 1ère ».

## Revendications

1. Groupe motopropulseur hybride de véhicule comportant :
- trois sources motrices (MT, ME1, ME2) parmi lesquelles une première machine électrique (ME1), une deuxième machine électrique (ME2) et un moteur thermique (MT) dont les arbres sont parallèles ;
- et une boîte de vitesses (4) à quatre arbres parallèles et à engrenages qui comporte :
- un arbre commun (7) de sortie vers les roues du véhicule ;
- et trois arbres d'entrée parallèles et décalés latéralement (11, 5, 6) parmi lesquels :
- un premier arbre d'entrée (5) relié à la première machine électrique (ME1) et qui porte un premier coupleur (CE1) ;
- un deuxième arbre d'entrée (6) relié à la deuxième machine électrique (ME2) qui porte un deuxième coupleur (CE2),
- un arbre (11) d'entrée relié au moteur thermique (MT), qui porte un coupleur, dit coupleur thermique (CT), et un groupe de trois pignons fous liés en rotation (28, 27, 26) dont un premier pignon (26) qui engrène en permanence avec un premier pignon fou (24) porté par le deuxième arbre d'entrée (6) de la deuxième machine électrique (ME2), un pignon (27) qui engrène en permanence avec un pignon fixe de ligne secondaire (22) porté par l'arbre commun (7) de sortie, et un deuxième pignon (28) qui engrène en permanence avec un deuxième pignon fou (25) porté par le deuxième arbre d'entrée (6) de la deuxième machine électrique (ME2) ;
dans laquelle chacun des coupleurs (CT, CE1, CE2) permet d'établir sélectivement le transfert du couple fourni par l'arbre d'entrée (11, 5, 6) qui le porte à l'arbre commun (7) de sortie vers les roues du véhicule.

2. Groupe motopropulseur (GMP) selon la revendication précédente , **caractérisé en ce que** le coupleur thermique (CT) et le deuxième coupleur (CE2) établissent sélectivement la transmission directe du couple du moteur thermique (MT) sur l'arbre commun (7) de sortie selon trois rapports de transmission.

3. Groupe motopropulseur selon la revendication 2, **caractérisé en ce que** le couple du moteur thermique (MT) est envoyé vers l'arbre commun (7) de sortie par l'intermédiaire :
- de deux pignons fous (18, 17) qui sont portés par l'arbre d'entrée (11) du moteur thermique (MT) et entre lesquels est interposé le coupleur thermique (CT) qu'il porte ;
- et de deux pignons fous (25, 24) qui sont portés par le deuxième arbre d'entrée (6) de la deuxième machine électrique (ME2), entre lesquels est interposé le deuxième coupleur (CE2), et dont chacun (25, 24) engrène en permanence avec un pignon fou associé (28, 26) porté par l'arbre d'entrée (11) du moteur thermique (MT).

4. Groupe motopropulseur selon l'une des revendications 2 ou 3, **caractérisé en ce que** le premier arbre d'entrée (5) de la première machine électrique (ME1) porte deux pignons fous (16, 15) entre lesquels est interposé le premier coupleur (CE1) et dont chacun engrène en permanence avec un pignon fixe associé (23, 22) porté par l'arbre commun (7) de sortie.

5. Groupe motopropulseur selon la revendication 3, **caractérisé en ce qu'**un pignon fixe (12) porté par le deuxième arbre d'entrée (6) de la deuxième machine électrique (ME2) engrène en permanence avec l'un (18) des deux pignons fous (18, 17) qui sont portés par l'arbre (11) d'entrée du moteur thermique (MT).

6. Groupe motopropulseur selon la revendication 5, **caractérisé en ce que** l'arbre commun (7) de sortie porte un pignon fixe (21) qui engrène en permanence avec l'autre (17) des deux pignons fous (18, 17) qui sont portés par l'arbre (11) d'entrée du moteur thermique (MT).

7. Groupe motopropulseur selon l'une quelconque des revendications 3 à 6, **caractérisé en ce qu'**un troisième pignon fou (27), appartenant au groupe de trois pignons fous (26, 27, 28) liés en rotation, porté par l'arbre d'entrée (11) du moteur thermique (MT) engrène en permanence avec un pignon fixe (22) porté par l'arbre commun (7) de sortie.

8. Groupe motopropulseur selon la revendication 7, **caractérisé en ce que** l'arbre commun (7) de sortie porte successivement trois pignons fixes (21, 22, 23) dont :
- un premier pignon fixe de ligne secondaire (21) qui engrène en permanence avec l'autre (17) des deux pignons fous (18, 17) qui sont portés par l'arbre (11) d'entrée du moteur thermique (MT) ;
- le deuxième pignon fixe de ligne secondaire (22) qui engrène en permanence avec ledit troisième pignon fou (27) porté par l'arbre d'entrée (11) du moteur thermique (MT) et l'un (15) des deux pignons fous (16, 15) portés par le premier arbre (5) entre lesquels est interposé le premier coupleur (CE1) ;
- et un troisième pignon fixe de ligne secondaire (23) qui engrène en permanence avec l'autre (16) des deux pignons fous (16, 15) portés par le premier arbre (5) entre lesquels est interposé le premier coupleur (CE1).

9. Groupe motopropulseur selon la revendication 7, **caractérisé en ce que** le groupe de trois pignons fous liés en rotation (28, 27, 26) porté par l'arbre d'entrée (11) du moteur thermique (MT) comporte :
- le premier pignon (26) qui engrène en permanence avec le premier (24) des deux pignons fous (25, 24) qui sont portés par le deuxième arbre d'entrée (6) de la deuxième machine électrique (ME2) ;
- le troisième pignon (27) qui engrène en permanence avec le deuxième pignon fixe de ligne secondaire (22) ;
- et le deuxième pignon (28) qui engrène en permanence avec le second (25) des deux pignons fous (25, 24) qui sont portés par le deuxième arbre d'entrée (6) de la deuxième machine électrique (ME2).

10. Groupe motopropulseur selon l'une quelconque des revendications précédentes, **caractérisé en ce que**, selon la direction axiale commune aux arbres d'entrée (11, 5, 6) de la boîte de vitesses (4), la boîte de vitesses (4) est disposée axialement entre, d'une part, le moteur thermique (MT) et, d'autre part, les deux machines électriques (ME1, ME2).

11. Groupe motopropulseur selon la revendication précédente, **caractérisé en ce que** la première machine électrique (ME1) et la deuxième machine électrique (ME2) sont agencées sensiblement dans un même plan orthogonal aux arbres parallèles (11, 5, 6) de la boîte de vitesses (4).

12. Procédé de commande d'un groupe motopropulseur selon les revendications 3 à 7, **caractérisé en ce que** la fermeture du premier coupleur (CE1) et du deuxième coupleur (CE2), permet de déplacer le véhicule avec seulement la première machine électrique (EM1), selon l'un ou l'autre de deux rapports de transmission.

13. Procédé de commande d'un groupe motopropulseur selon la revendication 8, **caractérisé en ce que** la fermeture du deuxième coupleur (CE2) permet de déplacer le véhicule en mode électrique avec seulement la deuxième machine électrique (ME2) selon l'un ou l'autre de deux rapports de transmission.

14. Procédé de commande d'un groupe motopropulseur selon la revendication 8, **caractérisé en ce que** la fermeture du premier et du deuxième coupleur (CE1, CE2) permet de déplacer le véhicule en mode électrique avec la première machine électrique (ME1) et l'appoint de la deuxième machine électrique (ME2) selon l'un ou l'autre de leurs deux rapports de transmission.

15. Procédé de commande d'un groupe motopropulseur selon les revendications 3 à 7, **caractérisé en ce que** la fermeture du coupleur thermique (CT) permet au moteur thermique (MT) d'entraîner la deuxième machine électrique (ME2) en génératrice de courant, selon l'un ou l'autre de deux rapports pour recharger les batteries du véhicule, en roulage et à l'arrêt du véhicule.

16. Procédé de commande d'un groupe motopropulseur selon les revendications 3 à 7, **caractérisé en ce que** la fermeture simultanée des trois coupleur (CT, CE1, CE2) permet de déplacer le véhicule en mode hybride avec le cumul du moteur thermique (MT), de la première machine électrique (ME1) et de la deuxième machine électrique (ME2) selon trois combinaisons différentes de rapports de transmission du moteur thermique (MT) et de la deuxième machine électrique (ME2).

17. Procédé de commande d'un groupe motopropulseur selon les revendications 3 à 7, **caractérisé en ce que** la fermeture simultanée du coupleur thermique (CT) et du deuxième coupleur (CE2) permet de déplacer le véhicule en mode thermique avec seulement le moteur thermique (MT) qui peut entraîner pour partie la première machine électrique (ME1) en génératrice de courant, pour recharger des batteries lors du roulage du véhicule ou entraîner le véhicules selon l'un ou l'autre de deux rapports combinés de transmission.

18. Procédé de commande d'un groupe motopropulseur selon les revendications 3 à 7, **caractérisé en ce que** la fermeture du coupleur thermique (CT) permet au moteur thermique (MT) d'entraîner le véhicule en mode thermique pur sans entraîner aucune des deux machines électriques (ME1, ME2).

## Patentansprüche

1. Fahrzeughybridantriebsstrang, umfassend:
- drei Antriebsquellen (MT, ME1, ME2), darunter eine erste Elektromaschine (ME1), eine zweite Elektromaschine (ME2) und eine Wärmekraftmaschine (MT), deren Wellen parallel sind;
- und ein Getriebe (4) mit vier parallelen Wellen und mit Zahnrädern, das umfasst:
- eine gemeinsame Abtriebswelle (7) in Richtung der Räder des Fahrzeugs;
- und drei parallele und seitlich versetzte Eingangswellen (11, 5, 6) darunter:
-- eine erste Eingangswelle (5), die mit der ersten Elektromaschine (ME1) verbunden ist und die einen ersten Koppler (CE1) trägt;
-- eine zweite Eingangswelle (6), die mit der zweiten Elektromaschine (ME2) verbunden ist, die einen zweiten Koppler (CE2) trägt,
-- eine Eingangswelle (11), die mit der Wärmekraftmaschine (MT) verbunden ist, die einen Koppler trägt, Thermokoppler (CT) genannt, und eine Gruppe von drei drehfest verbundenen Losrädern (28, 27, 26), einschließlich eines ersten Kleinrads (26), das mit einem ersten Losrad (24) permanent kämmt, das durch die zweite Eingangswelle (6) der zweiten Elektromaschine (ME2) getragen wird, eines Kleinrads (27), das mit einem Nebenlinienfestrad (22) permanent kämmt, das durch die gemeinsame Ausgangswelle (7) getragen wird, und eines zweiten Kleinrads (28), das mit einem zweiten Losrad (25) permanent kämmt, das durch die zweite Eingangswelle (6) der zweiten Elektromaschine (ME2) getragen wird;
wobei jeder der Koppler (CT, CE1, CE2) es ermöglicht, die Übersetzung des Drehmoments, das durch die Eingangswelle (11, 5, 6) bereitgestellt wird, die ihn trägt, an die gemeinsame Ausgangswelle (7) in Richtung der Räder des Fahrzeugs wahlweise einzurichten.

2. Antriebsstrang (GMP) nach dem vorstehenden Anspruch,
**dadurch gekennzeichnet, dass** der Thermokoppler (CT) und der zweite Koppler (CE2) die direkte Übersetzung des Drehmoments der Wärmekraftmaschine (MT) auf die gemeinsame Abtriebswelle (7) gemäß drei Übersetzungsverhältnissen wahlweise einrichten.

3. Antriebsstrang nach Anspruch 2, **dadurch gekennzeichnet, dass** das Drehmoment der Wärmekraftmaschine (MT) in Richtung der gemeinsamen Abtriebswelle (7) befördert wird über:
- zwei Losräder (18, 17), die durch die Eingangswelle (11) der Wärmekraftmaschine (MT) getragen werden und zwischen denen der Thermokoppler (CT) eingefügt ist, den sie trägt;
- und zwei Losräder (25, 24), die durch die zweite Eingangswelle (6) der zweiten Elektromaschine (ME2) getragen werden, zwischen denen der zweite Koppler (CE2) eingefügt ist und die jeweils (25, 24) mit einem zugeordneten Losrad (28, 26) permanent kämmen, das durch die Eingangswelle (11) der Wärmekraftmaschine (MT) getragen wird.

4. Antriebsstrang nach einem der Ansprüche 2 oder 3,
**dadurch gekennzeichnet, dass** die erste Eingangswelle (5) der ersten Elektromaschine (ME1) zwei Losräder (16, 15) trägt, zwischen denen der erste Koppler (CE1) eingefügt ist und die jeweils mit einem zugeordneten Festrad (23, 22) permanent kämmen, das durch die gemeinsame Abtriebswelle (7) getragen wird.

5. Antriebsstrang nach Anspruch 3, **dadurch gekennzeichnet, dass** ein Festrad (12), das durch die zweite Eingangswelle (6) der zweiten Elektromaschine (ME2) getragen wird, mit einem (18) der zwei Losräder (18, 17) permanent kämmt, die durch die Eingangswelle (11) der Wärmekraftmaschine (MT) getragen werden.

6. Antriebsstrang nach Anspruch 5, **dadurch gekennzeichnet, dass** die gemeinsame Ausgangswelle (7) ein Festrad (21) trägt, das mit dem anderen (17) der zwei Losräder (18, 17) permanent kämmt, die durch die Eingangswelle (11) der Wärmekraftmaschine (MT) getragen werden.

7. Antriebsstrang nach einem der Ansprüche 3 bis 6,
**dadurch gekennzeichnet, dass** ein drittes Losrad (27), das zu der Gruppe von drei drehfest verbundenen Losrädern (26, 27, 28) gehört, das durch die Eingangswelle (11) der Wärmekraftmaschine (MT) getragen wird, mit einem Festrad (22) permanent kämmt, das durch die gemeinsame Abtriebswelle (7) getragen wird.

8. Antriebsstrang nach Anspruch 7, **dadurch gekennzeichnet, dass** die gemeinsame Abtriebswelle (7) nacheinander drei Festräder (21, 22, 23) trägt, einschließlich:
- eines ersten Nebenlinienfestrads (21), das mit dem anderen (17) der zwei Losräder (18, 17) permanent kämmt, die durch die Eingangswelle (11) der Wärmekraftmaschine (MT) getragen werden;
- des zweiten Nebenlinienfestrads (22), das mit dem dritten Losrad (27), das durch die Eingangswelle (11) der Wärmekraftmaschine (MT) getragen wird, und einem (15) der zwei Losräder (16, 15) permanent kämmt, die durch die erste Welle (5) getragen werden, zwischen denen der erste Koppler (CE1) eingefügt ist;
- und eines dritten Nebenlinienfestrads (23), das mit dem anderen (16) der zwei Losräder (16, 15) permanent kämmt, die durch die erste Welle (5) getragen werden, zwischen denen der erste Koppler (CE1) eingefügt ist.

9. Antriebsstrang nach Anspruch 7, **dadurch gekennzeichnet, dass** die Gruppe von drei drehfest verbundenen Losrädern (28, 27, 26), die durch die Eingangswelle (11) der Wärmekraftmaschine (MT) getragen werden, umfasst:
- das erste Kleinrad (26), das mit dem ersten (24) der zwei Losräder (25, 24) permanent kämmt, die durch die zweite Eingangswelle (6) der zweiten Elektromaschine (ME2) getragen werden;
- das dritte Zahnrad (27), das mit dem zweiten Nebenlinienfestrad (22) permanent kämmt;
- und das zweite Kleinrad (28), das mit dem zweiten (25) der zwei Losräder (25, 24) permanent kämmt, die durch die zweite Eingangswelle (6) der zweiten Elektromaschine (ME2) getragen werden.

10. Antriebsstrang nach einem der vorstehenden Ansprüche,
**dadurch gekennzeichnet, dass** in der axialen Richtung, die den Eingangswellen (11, 5, 6) des Getriebes (4) gemeinsam ist, das Getriebe (4) zwischen einerseits der Wärmekraftmaschine (MT) und andererseits den zwei Elektromaschinen (ME1, ME2) axial angeordnet ist.

11. Antriebsstrang nach dem vorstehenden Anspruch,
**dadurch gekennzeichnet, dass** die erste Elektromaschine (ME1) und die zweite Elektromaschine (ME2) im Wesentlichen in einer gleichen Ebene orthogonal zu den parallelen Wellen (11, 5, 6) des Getriebes (4) eingerichtet sind.

12. Verfahren zum Steuern eines Antriebsstrangs nach den Ansprüchen 3 bis 7, **dadurch gekennzeichnet, dass** das Schließen des ersten Kopplers (CE1) und des zweiten Kopplers (CE2) es ermöglicht, das Fahrzeug nur mit der ersten Elektromaschine (EM1) gemäß dem einen oder dem anderen von zwei Übersetzungsverhältnissen zu bewegen.

13. Verfahren zum Steuern eines Antriebsstrangs nach Anspruch 8,
**dadurch gekennzeichnet, dass** das Schließen des zweiten Kopplers (CE2) es ermöglicht, das Fahrzeug in einem Elektromodus nur mit der zweiten Elektromaschine (ME2) gemäß dem einen oder dem anderen von zwei Übersetzungsverhältnissen zu bewegen.

14. Verfahren zum Steuern eines Antriebsstrangs nach Anspruch 8,
**dadurch gekennzeichnet, dass** das Schließen des ersten und des zweiten Kopplers (CE1, CE2) es ermöglicht, das Fahrzeug in dem Elektromodus mit der ersten Elektromaschine (ME1) und der Ergänzung der zweiten Elektromaschine (ME2) gemäß dem einen oder dem anderen ihrer zwei Übersetzungsverhältnisse zu bewegen.

15. Verfahren zum Steuern eines Antriebsstrangs nach den Ansprüchen 3 bis 7, **dadurch gekennzeichnet, dass** das Schließen des Thermokopplers (CT) es der Wärmekraftmaschine (MT) ermöglicht, die zweite Elektromaschine (ME2) als Stromgenerator zu betreiben, gemäß dem einen oder dem anderen von zwei Verhältnissen zum Aufladen der Fahrzeugbatterien während einer Fahrt und bei einem Anhalten des Fahrzeugs.

16. Verfahren zum Steuern eines Antriebsstrangs nach den Ansprüchen 3 bis 7, **dadurch gekennzeichnet, dass** das gleichzeitige Schließen der drei Koppler (CT, CE1, CE2) es ermöglicht, das Fahrzeug in einem Hybridmodus mit der Akkumulation der Wärmekraftmaschine (MT), der ersten Elektromaschine (ME1) und der zweiten Elektromaschine (ME2) gemäß drei verschiedenen Kombinationen von Übersetzungsverhältnissen der Wärmekraftmaschine (MT) und der zweiten Elektromaschine (ME2) zu bewegen.

17. Verfahren zum Steuern eines Antriebsstrangs nach den Ansprüchen 3 bis 7, **dadurch gekennzeichnet, dass** das gleichzeitige Schließen des thermischen Kopplers (CT) und des zweiten Kopplers (CE2) es ermöglicht, das Fahrzeug in einem thermischen Modus nur mit der Wärmekraftmaschine (MT) zu bewegen, der die erste Elektromaschine (ME1) teilweise als Stromgenerator betreiben kann, um die Batterien während der Fahrt des Fahrzeugs aufzuladen oder das Fahrzeug gemäß dem einen oder dem anderen von zwei kombinierten Übersetzungsverhältnissen zu betreiben.

18. Verfahren zum Steuern eines Antriebsstrangs nach den Ansprüchen 3 bis 7, **dadurch gekennzeichnet, dass** das Schließen des Thermokopplers (CT) es der Wärmekraftmaschine (MT) ermöglicht, das Fahrzeug in einem rein thermischen Modus zu betreiben, ohne eine der zwei elektrischen Maschinen (ME1, ME2) zu betreiben.

## Claims

1. A hybrid vehicle power train comprising:
- three drive sources (MT, ME1, ME2) including a first electric machine (ME1), a second electric machine (ME2) and a heat engine (MT) having parallel shafts;
- and a gearbox (4) having four parallel shafts and having gears, comprising:
- a common output shaft (7) to the wheels of the vehicle;
- and three parallel and laterally offset input shafts (11, 5, 6) including:
-- a first input shaft (5) which is connected to the first electric machine (ME1) and supports a first coupling (CE1);
-- a second input shaft (6) which is connected to the second electric machine (ME2) and supports a second coupling (CE2);
-- an input shaft (11) which is connected to the heat engine (MT) and supports a coupling, referred to as the heat coupling (CT), and a group of three rotationally coupled idler gears (28, 27, 26), including a first gear (26) which permanently meshes with a first idler gear (24) supported by the second input shaft (6) of the second electric machine (ME2), a gear (27) which permanently meshes with a fixed secondary line gear (22) supported by the common output shaft (7), and a second gear (28) which permanently meshes with a second idler gear (25) supported by the second input shaft (6) of the second electric machine (ME2);
wherein each of the couplings (CT, CE1, CE2) enables the transfer of the torque provided by the input shaft (11, 5, 6) which supports it to the common output shaft (7) to the wheels of the vehicle to be selectively established.

2. The power train (GMP) according to the preceding claim,
**characterized in that** the heat coupling (CT) and the second coupling (CE2) selectively establish the direct transmission of the torque from the heat engine (MT) to the common output shaft (7) according to three transmission ratios.

3. The power train according to claim 2, **characterized in that** the torque from the heat engine (MT) is transferred to the common output shaft (7) by means of:
- two idler gears (18, 17) which are supported by the input shaft (11) of the heat engine (MT) and between which the heat coupling (CT) which said shaft supports is positioned;
- and two idler gears (25, 24) which are supported by the second input shaft (6) of the second electric machine (ME2), between which the second coupling (CE2) is positioned, and each of which gears (25, 24) permanently meshes with an associated idler gear (28, 26) supported by the input shaft (11) of the heat engine (MT).

4. The power train according to either claim 2 or claim 3, **characterized in that** the first input shaft (5) of the first electric machine (ME1) supports two idler gears (16, 15) between which the first coupling (CE1) is positioned and each of which gears permanently meshes with an associated fixed gear (23, 22) supported by the common output shaft (7).

5. The power train according to claim 3, **characterized in that** a fixed gear (12) supported by the second input shaft (6) of the second electric machine (ME2) permanently meshes with one (18) of the two idler gears (18, 17) which are supported by the input shaft (11) of the heat engine (MT).

6. The power train according to claim 5, **characterized in that** the common output shaft (7) supports a fixed gear (21) which permanently meshes with the other (17) of the two idler gears (18, 17) which are supported by the input shaft (11) of the heat engine (MT).

7. The power train according to any of claims 3 to 6, **characterized in that** a third idler gear (27), belonging to the group of three rotationally coupled idler gears (26, 27, 28), supported by the input shaft (11) of the heat engine (MT) permanently meshes with a fixed gear (22) supported by the common output shaft (7).

8. The power train according to claim 7, **characterized in that** the common output shaft (7) supports three fixed gears (21, 22, 23) in sequence, including:
- a first fixed secondary line gear (21) which permanently meshes with the other (17) of the two idler gears (18, 17) which are supported by the input shaft (11) of the heat engine (MT);
- the second fixed secondary line gear (22) which permanently meshes with said third idler gear (27) supported by the input shaft (11) of the heat engine (MT) and one (15) of the two idler gears (16, 15) which are supported by the first shaft (5) between which the first coupling (CE1) is positioned;
- and a third fixed secondary line gear (23) which permanently meshes with the other (16) of the two idler gears (16, 15) supported by the first shaft (5) between which the first coupling (CE1) is positioned.

9. The power train according to claim 7, **characterized in that** the group of three rotationally coupled idler gears (28, 27, 26) supported by the input shaft (11) of the heat engine (MT) comprises:
- the first gear (26) which permanently meshes with the first (24) of the two idler gears (25, 24) which are supported by the second input shaft (6) of the second electric machine (ME2);
- the third gear (27) which permanently meshes with the second fixed secondary line gear (22);
- and the second gear (28) which permanently meshes with the second (25) of the two idler gears (25, 24) which are supported by the second input shaft (6) of the second electric machine (ME2).

10. The power train according to any of the preceding claims,
**characterized in that,** in the axial direction common to the input shafts (11, 5, 6) of the gearbox (4), the gearbox (4) is arranged axially between the heat engine (MT) and the two electric machines (ME1, ME2).

11. The power train according to the preceding claim, **characterized in that** the first electric machine (ME1) and the second electric machine (ME2) are arranged substantially in the same plane orthogonal to the parallel shafts (11, 5, 6) of the gearbox (4).

12. A method for controlling a power train according to claims 3 to 7,
**characterized in that** the closure of the first coupling (CE1) and the second coupling (CE2) enables the vehicle to move using only the first electric machine (EM1) according to either of two transmission ratios.

13. A method for controlling a power train according to claim 8,
**characterized in that** the closure of the second coupling (CE2) enables the vehicle to move in electric mode using only the second electric machine (ME2) according to either of two transmission ratios.

14. A method for controlling a power train according to claim 8,
**characterized in that** the closure of the first and second couplings (CE1, CE2) enables the vehicle to move in electric mode using the first electric machine (ME1) and the backup of the second electric machine (ME2) according to either of their two transmission ratios.

15. A method for controlling a power train according to claims 3 to 7,
**characterized in that** the closure of the heat coupling (CT) enables the heat engine (MT) to drive the second electric machine (ME2) to generate current according to either of two ratios, so as to recharge the batteries of the vehicle when the vehicle is in motion and when it is stationary.

16. A method for controlling a power train according to claims 3 to 7,
**characterized in that** the simultaneous closure of the three couplings (CT, CE1, CE2) enables the vehicle to move in hybrid mode using the combination of the heat engine (MT), the first electric machine (ME1) and the second electric machine (ME2) according to three different combinations of transmission ratios of the heat engine (MT) and the second electric machine (ME2).

17. A method for controlling a power train according to claims 3 to 7,
**characterized in that** the simultaneous closure of the heat coupling (CT) and of the second coupling (CE2) enables the vehicle to move in heat mode using only the heat engine (MT), which can partially drive the first electric machine (ME1) to generate current, so as to recharge the batteries when the vehicle is in motion or to drive the vehicle according to either of two combined transmission ratios.

18. A method for controlling a power train according to claims 3 to 7,
**characterized in that** the closure of the heat coupling (CT) enables the heat engine (MT) to drive the vehicle in pure heat mode without driving either of the two electric machines (ME1, ME2).
